# EUROPÄISCHE PATENTSCHRIFT

(11) **EP 2 653 715 B1**
(45) Veröffentlichungstag und Bekanntmachung des Hinweises auf die Patenterteilung: **13.04.2016**
(21) Anmeldenummer: 12002718.0
(22) Anmeldetag: 19.04.2012
(51) Int. Cl.: F03D 1/00, F03D 80/00, E04H 12/08

(54) **Turm für eine Windenergieanlage sowie Verfahren zur Errichtung eines solchen**
Tower for a wind energy facility and method for erecting same
Tour pour une éolienne ainsi que le procédé de montage de cette tour

(43) Veröffentlichungstag der Anmeldung: 23.10.2013
(73) Patentinhaber: Nordex Energy GmbH, 22419 Hamburg (DE)
(72) Erfinder: Hänler, Michael, 18236 Kröpelin (DE); Borowski, Steffen, 17438 Wolgast (DE)
(74) Vertreter: Hauck Patentanwaltspartnerschaft mbB

(56) Entgegenhaltungen:
- EP-A2- 2 187 050
- EP-A2- 2 431 609
- WO-A1-02/46552
- WO-A2-2008/000565
- US-A1- 2003 147 753

## Beschreibung

Die vorliegende Erfindung betrifft einen Turm für eine Windenergieanlage, der eine Turmsektion aufweist, die an ihrem zum Fundament weisenden Ende einen nach innen vorstehenden Fußflansch besitzt. Ebenfalls betrifft die Erfindung ein Verfahren zur Errichtung eines Turms für eine Windenergieanlage.

Die erfindungsgemäßen Türme für Windenergieanlagen umfassen Türme, die für eine Onshore- oder für eine Offshore-Errichtung ausgelegt sind. Bei Offshore-Windenergieanlagen wird nachfolgend die im Meeresboden verankerte Konstruktion, auf der der Turm errichtet wird, als Fundament bezeichnet.

Aus EP 1 933 029 A1 ist ein Verfahren zur Befestigung von Elementen innerhalb eines Turms einer Windenergieanlage bekannt geworden. Der Turm besteht aus verschiedenen Abschnitten aus Metall, wobei die darin vorgesehenen Elemente an Hilfsträgern befestigt sind. Die Hilfsträger sollen an jedem Turmabschnitt derart befestigt sein, dass keine Schwächung des Materials entsteht. Um eine Schwächung des Materials zu vermeiden, sind Doppel-T-Träger an einem oberen Flansch und einem unteren Flansch des Turmabschnitts befestigt und verlaufen parallel zu den Turmwänden. An dem oberen Flansch ist ein Fest-Lager vorgesehen, an dem die Träger befestigt sind, während am unteren Flansch ein Los-Lager vorgesehen ist, das eine Verschiebung des Trägers in Turmlängsrichtung gestattet.

Aus US 2007/0187956 A1 ist ein Turm für eine Windenergieanlage bekannt geworden, bei dem ein Leistungsmodul auf einer Tragkonstruktion angeordnet ist. Die Tragkonstruktion stützt sich auf dem Fundament der Windenergieanlage ab.

Aus DE 20 2010 007 565 U1 ist ein Windkraftanlagenturm bekannt geworden, der einen rohrförmigen Turmabschnitt aufweist, an dessen oberem Flansch Inneneinbauten des Turms aufhängbar sind.

Aus WO 2006/056196 ist eine Windenergieanlage sowie ein Verfahren zu deren Zusammenbau bekannt geworden, bei dem stapelfähige Einbauten übereinander gestapelt sind, wobei die am weitesten unten stehenden Einbauten direkt auf dem Fundament stehen.

Aus WO 2010/103114 A1 ist eine Windenergieanlage mit einer unteren Turmsektion bekannt geworden, in der eine elektrische Ausrüstung für die Windenergieanlage vormontiert ist. Bei der Vormontage werden die elektrischen Einheiten, wie beispielsweise Transformator, Steuerschaltschrank, Umrichter, Notschalter und dergleichen an den Turmwänden befestigt.

Aus DE 10 2005 049 289 A1 ist eine Kabelstütze, insbesondere für die Abstützung der Generatorkabel einer Windenergieanlage bekannt geworden, die eine Stützleiter aus mehreren Einzelleitern aufweist. Die Einzelleitern sind jeweils für sich gelagert und als Hängeleitern in dem Turm aufgehängt.

Aus WO 2008/000565 A2 ist ein Turm für eine Windenergieanlage bekannt geworden, dessen Einbauten in den Turmsektionen jeweils an einem oberen und einem unteren Flansch befestigt sind. Die die elektrischen Komponenten tragenden Einbauten stehen auf dem Fundament.

Aus WO 02/46552 A1 ist ein teleskopartig ausgebildeter Turm für große Windenergieanlagen bekannt. Während der Errichtung des Turms werden temporär Zugstangen zwischen obere und untere Flansche einer Turmsektion gespannt, entlang derer eine weitere Turmsektion in die Höhe bewegt werden kann.

Der Erfindung liegt die Aufgabe zugrunde, einen Turm für eine Windenergieanlage sowie ein Verfahren zu dessen Errichtung bereitzustellen, bei dem ohne eine Schwächung der Turmwände schwere elektrische Einbauten der Windenergieanlage sicher und zuverlässig vormontiert werden können.

Erfindungsgemäß wird die Aufgabe durch einen Turm mit den Merkmalen des Anspruchs 1 gelöst. Bevorzugte Ausgestaltungen bilden die Gegenstände der Unteransprüche.

Der erfindungsgemäße Turm ist vorgesehen und bestimmt für eine Windenergieanlage. Der Turm weist eine Turmsektion auf, die an ihrem zum Fundament weisenden Ende einen nach innen vorstehenden Fußflansch aufweist. Der Fußflansch kann sowohl einteilig als auch mehrteilig ausgebildet sein. So sind auch Fußflansche, welche mit einem Lastverteilblech verbunden sind, Fußflansche im Sinne der Erfindung. Der erfindungsgemäße Turmeinbau kann sich auf dem einteiligen Fußflansch abstützen. Alternativ kann sich der Turmeinbau auf dem mit dem Fußflansch verbundenen Lastverteilblech abstützen. Erfindungsgemäß ist ein selbsttragender Turmeinbau für die Turmsektion vorgesehen, der mindestens drei parallel und beabstandet zur Turmwand verlaufende Ständer und die Ständer miteinander verbindende Querträger aufweist. Die Ständer sind über dem Umfang des Fußflansches bevorzugt gleichmäßig verteilt, um einen selbsttragenden Turmeinbau zu bilden, der vollständig auf dem Fußflansch abgestützt ist. Die Ständer sind auf den Fußflansch aufgesetzt. Der selbsttragende Turmeinbau ist auf dem Fußflansch aufgeständert, ohne dass weitere, möglicherweise die Turmwand schwächende Verbindungen zwischen dem Turmeinbau und der Turmwand vorliegen. Die Erfindung beruht auf der Erkenntnis, dass selbst schwere Komponenten einer Windenergieanlage in dem Turm durch einen freistehenden und selbsttragenden Turmeinbau sicher und zuverlässig aufgestellt werden können. Verbindungen mit einem oberen Flansch oder mit der Turmwand, die den Aufwand für die Montage des Turmeinbaus erhöhen, können erfindungsgemäß unterbleiben.

Mit dem erfindungsgemäßen Turmeinbau kann der in der Turmsektion vorhandene Platz optimal genutzt werden. So weisen beispielsweise Turmeinbauten, die direkt auf dem Fundament aufgesetzt werden, einen deutlich geringeren Durchmesser als der Turm auf. Dies ist erforderlich, um den Turmeinbau durch die nach innen weisenden Flansche der Turmsektion hindurchbewegen oder die Turmsektion über den auf dem Fundament stehenden Turmeinbau schieben zu können. Durch das Abstützen des Turmeinbaus auf dem Fußflansch der Turmsektion, kann der Turmeinbau in der Turmsektion vormontiert und der vorhandene Platz optimal genutzt werden.

In einer bevorzugten Ausgestaltung sind die vom Fußflansch fortweisenden Enden der Ständer frei und nicht mit der Turmwand verbunden. Die Ständer werden mit ihren endseitigen Befestigungen auf dem Fußflansch allein durch die Querträger in ihrer Position gehalten und können so große Lasten tragen. Auch die Verwendung eines Los-Lagers, das bei einer etwaigen Verformung des Turms ausreichend Spiel für die Ständer gibt, kann unterbleiben, da die Ständer sich lediglich auf dem Fußflansch abstützen und ansonsten frei in dem Turm verlaufen. Strukturschwächende Eingriffe in die Turmwand können vermieden werden.

In einer Weiterführung der Erfindung sind die Querträger ausschließlich mit den Ständern oder einem anderen Querträger verbunden und nicht in irgendeiner Form an der Turmwand angebracht.

In einer bevorzugten Weiterführung der Erfindung sind die Querträger waagerecht zwischen den Ständern angeordnet, um in dem Turmeinbau mindestens eine Plattform zu bilden. Bevorzugt weist der Turmeinbau mehrere übereinander angeordnete Plattformen auf, auf denen die einzelnen Bauteile für Bedienpersonal zugänglich gestellt werden können.

In einer besonders bevorzugten Ausgestaltung ist eine oberhalb des Fußflansches angeordnete Plattform durch kurze Ständer aufgeständert, die mindestens einen Querträger der Plattform auf dem Fußflansch abstützen. Auf dieser nahe dem Fußflansch befindlichen Plattform können besonders schwere Komponenten der Windenergieanlage aufgestellt werden. Diese Plattform kann zusätzlich zu den kurzen Ständern an den langen Ständern abgestützt sein.

In einer bevorzugten Weiterbildung der Erfindung ist mindestens ein Dämpfungselement seitlich zwischen dem Turmeinbau und der Innenseite der Turmwand angeordnet. Bevorzugt ist das Dämpfungselement an dem Turmeinbau befestigt. Das Dämpfungselement verhindert, dass Schwingungen von der Turmwand, beispielsweise durch den Betrieb der Windenergieanlage, auf den Turmeinbau und die in diesem aufgestellten Komponenten übertragen werden. Auch kann die Übertragung von Schwingungen aus dem Turmeinbau auf die Turmsektion durch das Dämpfungselement unterbunden werden. Bei dem Dämpfungselement ist zu unterscheiden, ob dieses permanent einen Kontakt zwischen dem Turmeinbau und der Innenseite der Turmwand herstellt oder ob dieses lediglich bei Schwingungen mit großer Amplitude in Kontakt mit der Turmwand tritt und so die Übertragungen von Schwingungen verhindert.

Bevorzugt sind die Ständer als ein T-Profil oder als ein Doppel-T-Profil ausgebildet. Die Ständer besitzen an ihrem zum Fußflansch weisenden Ende ein Lastverteilblech, das bevorzugt mit Bohrungen ausgestattet ist, um die Ständer mit dem Fußflansch zu verbinden. Alternativ oder zusätzlich können die Ständer auch mit einem Flansch ausgestattet sein, über den der Ständer an dem Fußflansch befestigt werden kann. Der Flansch kann dabei entweder auf der zum Turmeinbau weisenden Flachseite des Fußflansches aufliegen oder über diesen vorstehend, an dessen Stirnfläche anliegen und befestigt sein.

In einer bevorzugten Ausgestaltung ist der Fußflansch einstückig mit der Turmwand ausgebildet. Der Fußflansch bildet in dieser Ausgestaltung gleichzeitig auf seiner Unterseite eine Auflagefläche, mit der die Turmsektion auf einem Fundamentkörper, einer weiteren Turmsektion oder einem den Fundamentkörper und die untere Turmsektion verbindenden Adapter gestellt werden kann.

In einer alternativen Ausgestaltung ist der für die Aufständerung des Turmeinbaus vorgesehene Fußflansch mehrteilig ausgebildet und mit der Turmsektion über Verbindungsmittel verbunden. Ein solcher Fußflansch kann beispielsweise durch ein Lastverteilblech gebildet werden, das zwischen der Turmsektion und deren Auflage, beispielsweise einem Fundamentkörper oder einem Adapter angeordnet ist.

Die erfindungsgemäße Aufgabe wird ebenfalls durch ein Verfahren mit den Merkmalen aus Anspruch 14 gelöst. Vorteilhafte Ausgestaltungen des Verfahrens bilden die Gegenstände der Unteransprüche.

Das erfindungsgemäße Verfahren ist vorgesehen zur Errichtung eines Turms für eine Windenergieanlage. In einem Verfahrensschritt erfolgt das Bereitstellen einer Turmsektion, die an einem Ende einen nach innen vorstehenden Fußflansch aufweist. Zur Errichtung des selbsttragenden Turmeinbaus in der Turmsektion, der mindestens drei parallel und beabstandet zur Turmwand verlaufende Ständer und die Ständer miteinander verbindende Querträger aufweist, werden in einem nachfolgenden Schritt die Ständer über den Umfang des Fußflansches verteilt angeordnet und an ihren Fußenden auf dem Fußflansch der Turmsektion befestigt, so dass der selbsttragende Turmeinbau frei in der Turmsektion auf den Fußflansch gestützt steht. Der Einbau eines selbsttragenden und freistehenden, sich lediglich auf dem Fußflansch abstützenden Turmeinbaus bietet den Vorteil, dass eine Schwächung der Turmwand vermieden wird. In nachfolgenden Schritten werden die Ständer mit den Querträgern verbunden und die Bodenplatten zur Ausbildung von Plattformen auf den Querträgern montiert. In weiteren Schritten erfolgt die Montage von Komponenten in den Turmeinbau sowie die Errichtung des Turms für die Windenergieanlage mit der Turmsektion, in der bereits die Komponenten in dem Turmeinbau montiert sind. Hierdurch wird die Montagezeit, insbesondere bei Offshore-Türmen die Montagezeit auf See, reduziert, wodurch es zu erheblichen Kosteneinsparungen bei der Errichtung der Türme kommt. Bei den Komponenten handelt es sich beispielsweise um elektrische Komponenten der Windenergieanlage, die im Fußbereich des Turms angeordnet werden können.

In einer bevorzugten Weiterführung des Verfahrens erfolgt nach Montage der Komponenten in den Turmeinbau und vor Errichtung des Turms eine Prüfung der montierten Komponenten. Auf diese Weise können Fehler bei der Verbindung der Komponenten oder Fehler in den Komponenten selbst frühzeitig erkannt werden. Die Beseitigung von Fehlern erst am Ort der Errichtung des Turms, sei es offshore oder onshore, kann vermieden werden.

In einer bevorzugten Ausgestaltung wird die Turmsektion aufrecht stehend bereitgestellt, so dass der Fußflansch sich am unteren Ende der Turmsektion befindet und die Montage des Turmeinbaus auf dem Fußflansch in der aufrecht stehenden Turmsektion erfolgen kann. Der Fußflansch kann einstückig mit der Turmsektion ausgebildet sein, alternativ ist es auch möglich, beispielsweise ein Lastverteilblech mit der Turmsektion zu verbinden und dieses als Fußflansch für die Aufständerung des Turmeinbaus vorzusehen.

In einer bevorzugten Ausgestaltung wird die Turmsektion sodann aufrecht stehend zur Errichtungsstelle des Turms transportiert. Hierdurch wird vermieden, dass der freistehende Turmeinbau in der Turmsektion falsch belastet oder beschädigt wird.

Bevorzugt sind die in dem Turmeinbau montierten Bauteile eines oder mehrerer Komponenten aus der folgenden Gruppe: Generator, Transformator, Schaltschrank und Umrichter. Diese können in dem Turm auch miteinander elektrisch verbunden und ganz oder teilweise in ihrem Betrieb getestet werden.

Eine bevorzugte Ausgestaltung des erfindungsgemäßen Turms wird nachfolgend anhand eines Ausführungsbeispiels näher erläutert. Nachfolgend zeigen:
- Fig. 1: eine schematische Ansicht einer Windenergieanlage,
- Fig. 2: eine schematische Ansicht des erfindungsgemäßen Turmeinbaus in einem Längsschnitt,
- Fig. 3a-c: Schnittdarstellungen entlang der Linien A-A, B-B und C-C aus Fig. 2,
- Fig. 4a-b: eine schematische Ansicht der Ständer im Bereich des Fußflansches und
- Fig. 5: eine schematische Ansicht der Ständer im Bereich des Fußflansches bei Verwendung eines Lastverteilbleches.

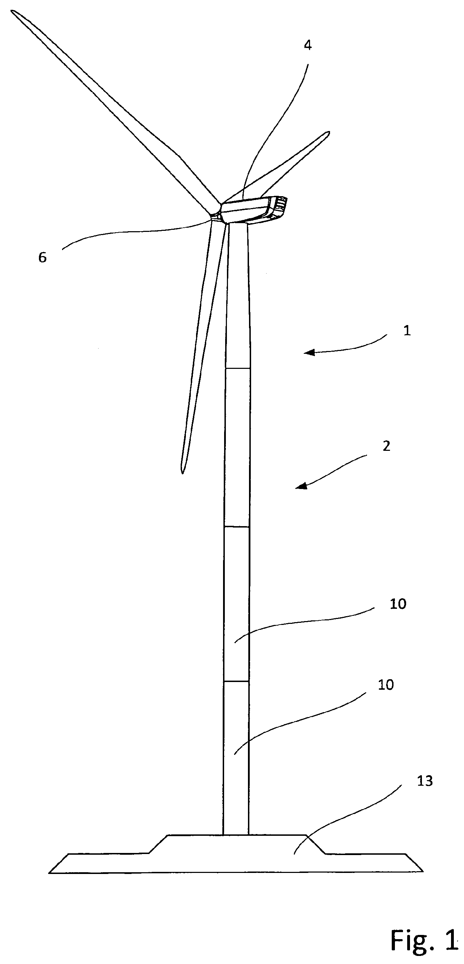

Fig. 1 zeigt eine Windenergieanlage 1 mit einem Turm 2 und einer darauf angeordneten Gondel 4. In der Gondel befindet sich der Triebstrang (nicht dargestellt) der Windenergieanlage, welcher mit dem Rotor 6 verbunden ist. Der Turm 2 besteht aus mehreren übereinander angeordneten Turmsektionen 10. Die unterste Turmsektion 10 steht auf einem schematisch dargestellten Fundamentkörper 13, der beispielsweise ganz oder teilweise im Erdbereich eingelassen ist. Alternativ kann die unterste Turmsektion auch mit einer Fundamentkonstruktion einer Offshore-Gründung verbunden sein.

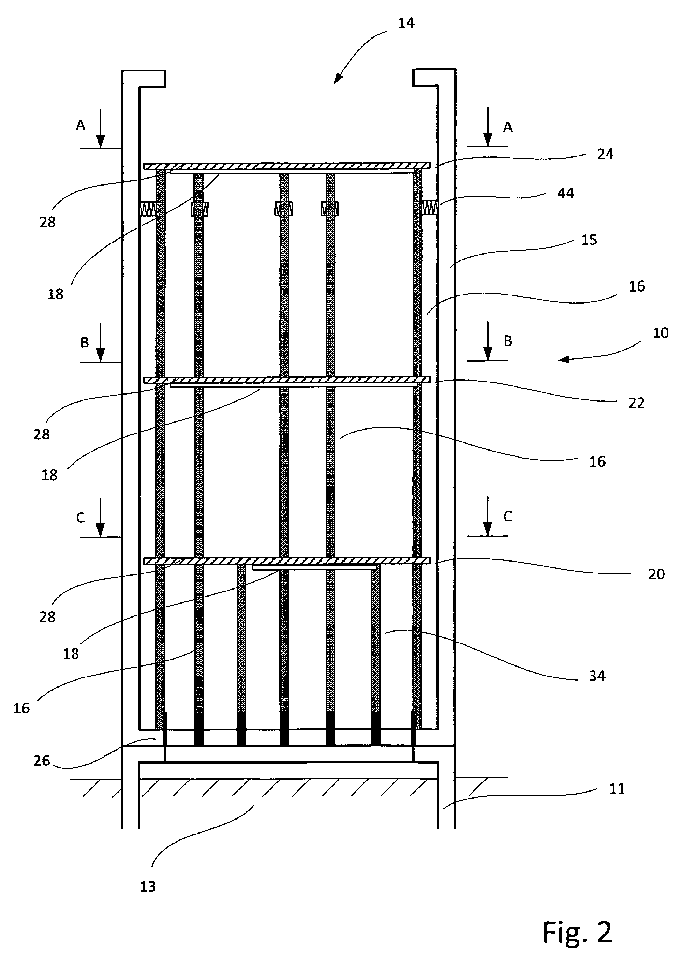

Fig. 2 zeigt eine Turmsektion 10, welche über einen Adapter 11 mit dem Fundament 13 verbunden ist. In der Turmsektion 10 ist ein selbsttragender Turmeinbau 14 angeordnet, der aus mehreren Ständern 16, 34 besteht. Die Ständer 16, 34 stützen sich auf dem Fußflansch 26 der Turmsektion 10 ab. Sie sind in einem Abstand von der Turmwand angeordnet und über Querträger 18 miteinander verbunden. Die Querträger 18 sind mit den Ständern 16, 34 derart verbunden, dass Plattformen 20, 22, 24 gebildet werden. Die Plattformen sind untereinander über eine Leiter (nicht dargestellt) begehbar. Auf den Querträgern der einzelnen Plattformen sind jeweils Bodenplatten 28 ausgelegt, so dass die gesamte Plattform begehbar ist. Die Bodenplatten 28 stehen über die Ständer 16, 34 seitlich vor, besitzen aber einen Abstand zur Innenseite der Turmwand. Die Plattformen dienen zur Aufstellung von Komponenten (nicht dargestellt) wie z.B. eines Transformators, einer Schaltanlage oder eines Umrichters. Neben der Leiter sind die einzelnen Plattformen zudem durch eine Kabelführung in vertikaler Richtung miteinander verbunden. An dem oberen Ende des Turmeinbaus sind an den Ständern 16 Dämpfungselemente 44 vorgesehen, die zwischen dem Turmeinbau und der Innenwand der Sektion wirken. Durch die Dämpfungselemente 44 wird eine Übertragung von Schwingungen zwischen dem Turmeinbau und der Turmwand verhindert.

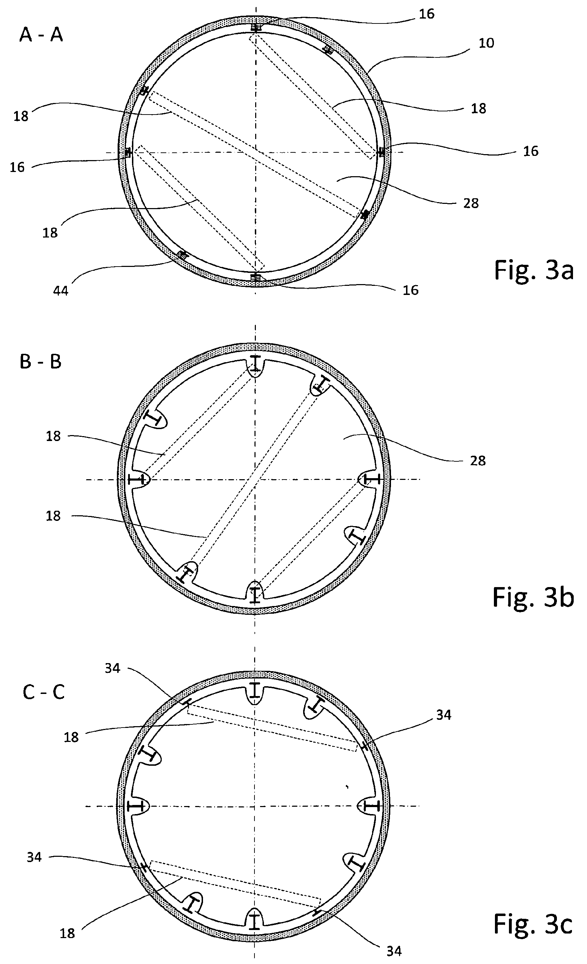

Die Figuren 3a, 3b und 3c zeigen Querschnitte entlang der Linien A-A, B-B und C-C. Die Schnittdarstellungen zeigen die innerhalb der Turmsektion 10 angeordneten Plattformen 20, 22, 24 mit den jeweils zugehörigen Ständern 16, 34 sowie den Querträgern 18 und Bodenplatten 28. Im dargestellten Ausführungsbeispiel besitzt der selbsttragende Turmeinbau zwölf Ständer, von denen sich vier Ständer 34 bis zur untersten Plattform 20 und acht Ständer 16 bis zur obersten Plattform 24 erstrecken. Alternativ kann die Anzahl der Ständer größer oder kleiner sein. Auch kann die Anzahl von langen und kurzen Ständern entsprechend der von den Plattformen aufzunehmenden Lasten variiert werden.

Fig. 3a zeigt eine Bodenplatte 28, welche auf drei Querträgern 18 abgestützt ist. Ein Querträger 18 verläuft durch die Turmmitte und ist an zwei gegenüberliegenden Ständern 16 befestigt, während zwei weitere Querträger 18 außermittig verlaufen und an anderen Ständern 16 befestigt sind. Die bis zur oberen Plattform 24 verlaufenden Ständer 16 sind nicht gleichmäßig über den Umfang verteilt, so dass die Querträger 18 nicht parallel zueinander verlaufen.

Fig. 3b zeigt die Ständer 16 und die Querträger 18 in dem Schnitt entlang der Linie B-B aus Fig. 2. Hier sind die Querträger mit einer anderen Orientierung gegenüber der darüberliegenden Plattform aus Fig. 3a angeordnet, um die Last auf andere Ständer 16 zu verteilen.

Fig. 3c zeigt den Schnitt entlang der Linie C-C aus Fig. 2, wobei hier die Bodenplatte 28 nur durch zwei Querträger 18 abgestützt wird. Der mittlere Querträger 28 kann entfallen.

Auch ist in Fig. 3c zu erkennen, dass die Plattform 20 nur durch die Ständer 34 abgestützt ist. Die Ständer 34 erstrecken sich nicht bis zu den weiteren Plattformen 22 und 24, sondern stützen lediglich die Plattform 20 zur Aufnahme von besonders schweren Lasten gegenüber dem Fußflansch 26 ab. Alternativ kann die Plattform 20 zusätzlich an den Ständern 16 in der der 2-Uhr-, 4-Uhr-, 8-Uhr- und 11-Uhr-Position abgestützt werden.

Neben der Verwendung von Querträgern 18 ist es auch möglich, ringförmige Träger (nicht dargestellt) an den Ständern anzubringen, um so die Plattformen besser, insbesondere in ihrem Randbereich, abstützen zu können. Die ringförmigen Träger können dabei später als geschlossener Ring ausgebildet sein, der an allen Ständern befestigt ist oder als Ringsegment, das an einem Teil der Ständer befestigt ist. Alternativ können zwischen den Trägern 18 auch weitere gerade Träger angebracht werden, um die Stützweite zu verringern.

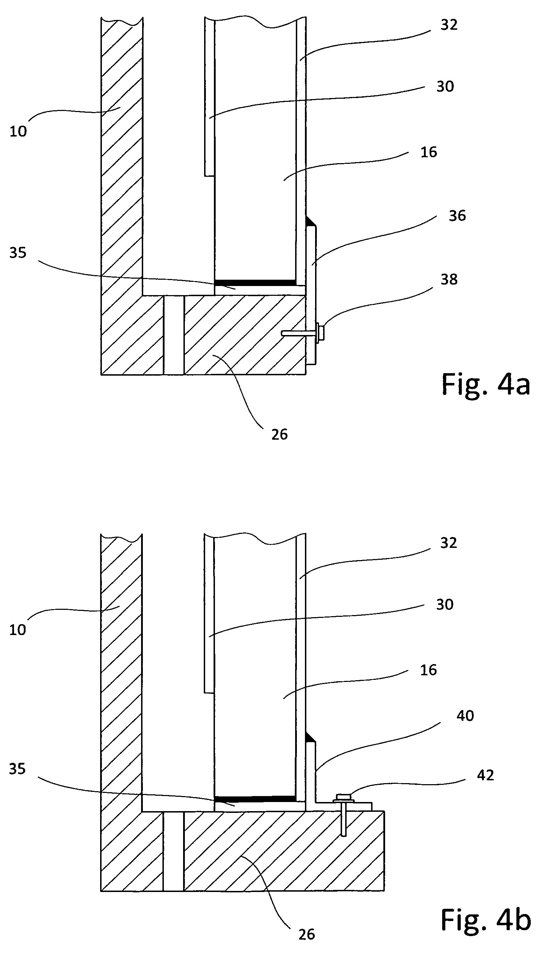

Die Figuren 4a und 4b zeigen beispielhaft die Befestigung eines Ständers 16 an dem Fußflansch 26 der Turmsektion 10. Der Ständer 16 ist als Doppel-T-Profil mit zwei T-Schenkeln 30, 32 ausgebildet. Der zur Turmwand weisende T-Schenkel 30 endet oberhalb des Fußflansches 26, so dass der Ständer 16 unmittelbar oberhalb des Fußflansches 26 lediglich als T-Profil mit einem T-Schenkel 32 ausgebildet ist. Das untere Ende des Profils 16 ist mit einem Lastverteilblech 35 fest verschweißt, wobei sich das Lastverteilblech 35 auch seitlich über den T-Schenkel 32 hinaus erstrecken kann. Auf der nach innen weisenden Seite des T-Schenkels 32 ist ein Verbindungsflansch 36 mit dem T-Schenkel 32 verbunden, der nach unten über den Ständer 16 herausragt. Der Verbindungsflansch 36 ist über einen Bolzen 38 stirnseitig mit dem Fußflansch 26 verschraubt, um den Ständer 16 mit dem Fußflansch 26 zu verbinden.

Fig. 4b zeigt eine alternative Ausgestaltung, bei der ein abgewinkelter Verbindungsflansch 40 vorgesehen ist, der über einen Bolzen 42 in dem Fußflansch 26 befestigt ist. Alternativ zu den beiden Verbindungsflanschen 36 und 40 ist es auch möglich, über das Lastverteilblech 34 den Ständer 16 mit dem Fußflansch 26 zu verbinden.

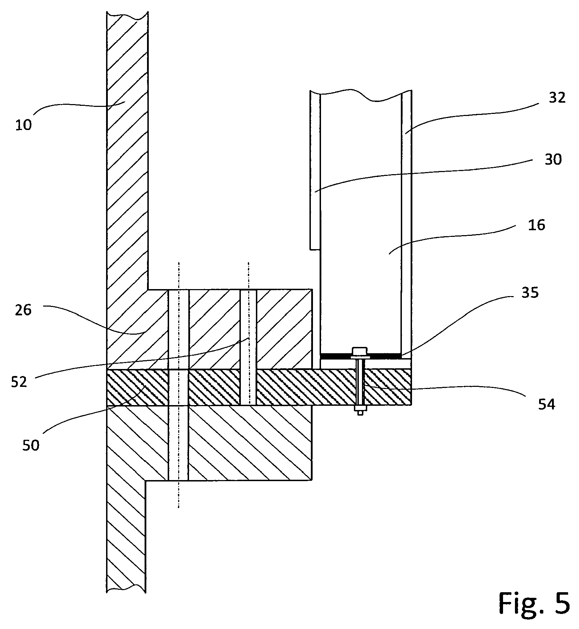

Fig. 5 zeigt eine weitere alternative Ausgestaltung des erfindungsgemäßen Turmeinbaus. Die Turmsektion 10 weist einen Fußflansch 26 auf. Der Fußflansch ist mit einem Lastverteilblech 50 verbunden und somit nach dem Verständnis der Erfindung als mehrteiliger Fußflansch ausgebildet. Die Verbindung von Fußflansch 26 und Lastverteilblech 50 erfolgt über Verbindungsmittel (nicht dargestellt) in der Bohrung 52. Der Ständer 16 ist als Doppel-T-Profil mit zwei T-Schenkeln 30, 32 ausgebildet. Der zur Turmwand weisende T-Schenkel 30 endet oberhalb des Fußflansches 26, so dass der Ständer 16 im Bereich des Fußflansches 26 lediglich als T-Profil mit einem T-Schenkel 32 ausgebildet ist. Das untere Ende des Profils 16 ist mit einem Lastverteilblech 35 fest verschweißt, welches sich seitlich über den T-Schenkel 32 hinaus erstreckt. Im Bereich der seitlichen Erstreckung weist das Lastverteilblech 35 Bohrungen auf, welche mit Bohrungen im Lastverteilblech 50 korrespondieren. Der Ständer 16 wird über die Bohrungen mittels Bolzen 54 mit dem Lastverteilblech als Fußflansch verbunden.

## Patentansprüche

1. Turm für eine Windenergieanlage, der eine Turmsektion (10) mit einer Turmwand (15) und einem nach innen vorstehenden Fußflansch (26) aufweist,
wobei ein selbsttragender Turmeinbau (14) für die Turmsektion (10) vorgesehen ist, der mindestens drei parallel und beabstandet zu der Turmwand (15) verlaufende Ständer (16, 34) und die Ständer miteinander verbindende Querträger (18) aufweist,
**dadurch gekennzeichnet, dass**
die Ständer (16, 34) über den Umfang des Fußflansches (26) verteilt angeordnet und jeweils auf dem Fußflansch (26) abgestützt sind.

2. Turm nach Anspruch 1, **dadurch gekennzeichnet, dass** die vom Fußflansch (26) fortweisenden Enden der Ständer (16) frei stehen und nicht mit der Turmwand (15) verbunden sind.

3. Turm nach Anspruch 1 oder 2, **dadurch gekennzeichnet, dass** die Querträger (18) ausschließlich mit den Ständern (16) verbunden sind.

4. Turm nach einem der Ansprüche 1 bis 3, **dadurch gekennzeichnet, dass** die Querträger (18) horizontal zwischen den Ständern (16, 34) angeordnet sind, um in dem Turmeinbau mindestens eine Plattform (20, 22, 24) zu bilden.

5. Turm nach Anspruch 4, **dadurch gekennzeichnet, dass** eine oberhalb des Fußflansches (26) angeordnete Plattform (20) kurze Ständer (34) aufweist, die mindestens einen der Querträger in der Plattform (20) auf dem Fußflansch (26) abstützen.

6. Turm nach einem der Ansprüche 1 bis 5, **dadurch gekennzeichnet, dass** mindestens ein Dämpfungselement (44) seitlich zwischen dem Turmeinbau (14) und der Innenseite der Turmwand angeordnet ist.

7. Turm nach Anspruch 6, **dadurch gekennzeichnet, dass** das Dämpfungselement (44) an dem Turmeinbau befestigt ist.

8. Turm nach einem der Ansprüche 1 bis 7, **dadurch gekennzeichnet, dass** die Ständer (16, 34) als T-Profil oder als Doppel-T-Profil ausgebildet sind.

9. Turm nach einem der Ansprüche 1 bis 8, **dadurch gekennzeichnet, dass** die Ständer (16, 34) an ihrem zum Fußflansch (26) weisenden Ende ein Lastverteilblech (35) aufweisen.

10. Turm nach Anspruch 9, **dadurch gekennzeichnet, dass** das Lastverteilblech (35) Bohrungen aufweist, um an dem Fußflansch verschraubt zu werden.

11. Turm nach einem der Ansprüche 1 bis 10, **dadurch gekennzeichnet, dass** an mindestens einem Ständer (16, 34) im Bereich seines Fußendes ein Verbindungsflansch (36, 40) vorgesehen ist, über den der Ständer (16, 34) mit dem Fußflansch verbunden ist.

12. Turm nach einem der Ansprüche 1 bis 11, **dadurch gekennzeichnet, dass** der Fußflansch einstückig mit der Turmwand ausgebildet ist.

13. Turm nach einem der Ansprüche 1 bis 11, **dadurch gekennzeichnet, dass** der Fußflansch mit der Turmsektion über Verbindungsmittel verbunden ist.

14. Verfahren zur Errichtung eines Turms für eine Windenergieanlage mit folgenden Verfahrensschritten:
- Bereitstellen einer Turmsektion (10), die an einem Ende einen nach innen vorstehenden Fußflansch (26) aufweist,
- Anordnen von mindestens drei Ständern, über den Umfang des Fußflansches verteilt,
- Befestigen der Ständer an ihrem Fußende auf dem Fußflansch derart, dass der selbsttragende Turmeinbau frei in der Turmsektion auf dem Fußflansch gestützt steht,
- Verbinden der Ständer mit Querträgern,
- Montage von Bodenplatten auf den Querträgern zur Ausbildung von Plattformen,
- Montage von Komponenten in dem Turmeinbau,
- Errichten des Turms für die Windenergieanlage mit der Turmsektion, in der bereits die Komponenten in dem Turmeinbau montiert sind.

15. Verfahren nach Anspruch 14, **dadurch gekennzeichnet, dass** nach der Montage der Komponenten in dem Turmeinbau und vor Errichten des Turms, die montierten Komponenten geprüft werden.

16. Verfahren nach Anspruch 14 oder 15, **dadurch gekennzeichnet, dass** die Turmsektion aufrecht stehend bereitgestellt wird.

17. Verfahren nach einem der Ansprüche 14 bis 16, **dadurch gekennzeichnet, dass** die Turmsektion aufrecht stehend zur Errichtungsstelle des Turms transportiert wird.

18. Verfahren nach einem der Ansprüche 14 bis 17, **gekennzeichnet durch**
- Befestigen eines Fußflansches an der Turmsektion bevor die Turmsektion bereitgestellt wird.

## Claims

1. Tower for a wind turbine comprising a tower section (10) having a tower wall (15) and an inwardly projecting base flange (26), wherein a self-supporting tower installation (14) for the tower segment (10) is provided, which comprises at least three upright columns (16, 34) extending parallel and spaced apart from the tower wall (15) and cross beams (18) interconnecting the upright columns, **characterised in that** the upright columns (16, 34) are distributed over the circumference of the base flange (26) and supported on the base flange (26).

2. Tower according to claim 1, **characterised in that** the ends of the upright columns (16) facing away from bottom flange (26) are standing free and do not connect to the tower wall (15).

3. Tower according to claim 1 or 2, **characterised in that** the cross beams (18) are solely connected to the upright columns (16).

4. Tower according to any one of claims 1 to 3, **characterised in that** the cross beams (18) are arranged horizontally between the upright columns (16, 34) to form at least one platform (20, 22, 24) in the tower installation.

5. Tower according to claim 4, **characterised in that** a platform (20) arranged above the base flange (26) possesses short upright columns (34) supporting at least one of the cross beams of the platform (20) on the base flange (26).

6. Tower according to any one of claims 1 to 5, **characterised in that** at least one damping element (44) is arranged laterally between the tower installation (14) and the inside of the tower wall.

7. Tower according to claim 6, **characterised in that** the damping element (44) is mounted to the tower installation.

8. Tower according to any one of claims 1 to 7, **characterised in that** the upright columns (16, 34) are designed as a T-profile or as a double T-profile.

9. Tower according to any one of claims 1 to 8, **characterised in that** the upright columns (16, 34) have a load distribution plate (35) at their end facing to the base flange (26).

10. Tower according to claim 9, **characterised in that** the load distribution plate (35) has holes to be screwed to the base flange.

11. Tower according to any one of claims 1 to 10, **characterised in that** a connecting flange (36, 40) is provided at least at one upright column (16, 34) in the region of its foot end, through which the upright column (16, 34) is connected to the base flange.

12. Tower according to any one of claims 1 to 11, **characterised in that** the base flange is formed integrally with the tower wall.

13. Tower according to any one of claims 1 to 11, **characterised in that** the base flange is connected to the tower section by connecting means.

14. Method for erecting a tower for a wind turbine, comprising the steps:
- Providing a tower section (10) having an inwardly projecting base flange (26) at one end,
- Arranging at least three upright columns, distributed over the circumference of the base flange,
- Attaching the upright columns at their foot end on the base flange so that the self-supporting tower installation is standing free and supported in the tower section on the base flange,
- Connecting the upright columns with cross beams,
- Installing floor panels on the cross beams in order to form platforms,
- Installing components in the tower installation,
- Erecting the tower for the wind turbine comprising the tower section, in which the components are installed in the tower installation.

15. Method according to claim 14, **characterised in that**, after installing the components in the tower installation and prior to erecting the tower, the installed components are examined.

16. Method according to claim 14 or 15, **characterised in that** the tower section is provided standing upright.

17. Method according to any one of claims 14 to 16, **characterised in that** the tower section is transported standing upright to the erection site of the tower.

18. Method according to any one of claims 14 to 17, **characterised by**
- Attaching a base flange to the tower section before the tower section is provided.

## Revendications

1. Tour pour une éolienne présentant une section de tour (10) avec une paroi de tour (15) et une bride inférieure (26) faisant saillie vers l'intérieur, dans laquelle une structure autoportante (14) encastrée dans la tour présentant au moins trois supports (16, 34) parallèles et écartés de la paroi de tour (15) et des traverses (18) reliant les supports l'un avec l'autre est prévue pour la section de tour (10),
**caractérisée en ce que**
les supports (16, 34) sont répartis sur la circonférence de la bride inférieure (26) et respectivement appuyés sur la bride inférieure (26).

2. Tour selon la revendication 1, **caractérisée en ce que** les extrémités des supports (16) détournées de la bride inférieure (26) sont libres et ne sont pas reliées à la paroi de tour (15).

3. Tour selon la revendication 1 ou 2, **caractérisée en ce que** les traverses (18) sont reliées exclusivement aux supports (16).

4. Tour selon l'une quelconque des revendications 1 à 3, **caractérisée en ce que** les traverses (18) sont disposées horizontalement entre les supports (16, 34) afin de former dans la structure encastrée dans la tour au moins une plate-forme (20, 22, 24).

5. Tour selon la revendication 4, **caractérisée en ce qu'**une plate-forme (20) disposée au-dessus de la bride inférieure (26) présente des courts supports (34) qui étaient au moins une des traverses dans la plate-forme (20) sur la bride inférieure (26).

6. Tour selon l'une quelconque des revendications 1 à 5, **caractérisée en ce qu'**au moins un élément d'amortissement (44) est disposé latéralement entre la structure encastrée dans la tour (14) et la face intérieure de la paroi de tour.

7. Tour selon la revendication 6, **caractérisée en ce que** l'élément d'amortissement (44) est fixé sur la structure encastrée dans la tour.

8. Tour selon l'une quelconque des revendications 1 à 7, **caractérisée en ce que** les supports (16, 34) sont formés comme profilé en T ou comme profilé en double T.

9. Tour selon l'une quelconque des revendications 1 à 8, **caractérisée en ce que** chaque support (16, 34) présente à son extrémité orientée vers la bride inférieure (26) une tôle de répartition des charges (35).

10. Tour selon la revendication 9, **caractérisée en ce que** la tôle de répartition des charges (35) présente des alésages pour le vissage sur la bride inférieure.

11. Tour selon l'une quelconque des revendications 1 à 10, **caractérisée en ce qu'**est prévue sur au moins un support (16, 34), au niveau de son extrémité inférieure, une bride de connexion (36, 40) via laquelle le support (16, 34) est relié à la bride inférieure.

12. Tour selon l'une quelconque des revendications 1 à 11, **caractérisée en ce que** la bride inférieure est formée en une pièce avec la paroi de tour.

13. Tour selon l'une quelconque des revendications 1 à 11, **caractérisée en ce que** la bride inférieure est reliée à la section de tour à l'aide de moyens de fixation.

14. Procédé de montage d'une tour pour une éolienne avec les étapes de procédé suivantes :
- mise à disposition d'une section de tour (10) présentant sur une extrémité une bride inférieure (26) faisant saillie vers l'intérieur,
- disposition des au moins trois supports répartis sur la circonférence de la bride inférieure,
- fixation de chaque support à son extrémité inférieure sur la bride inférieure de manière à ce que la structure encastrée dans la tour autoportante soit étayée librement dans la section de tour sur la bride inférieure,
- liaison des supports par des traverses,
- montage de plaques de fond sur les traverses pour la formation de plateformes,
- montage de composantes dans la structure encastrée dans la tour,
- édification de la tour pour l'éolienne avec la section de tour dans laquelle les composantes sont déjà montées dans la structure encastrée dans la tour.

15. Procédé selon la revendication 14, **caractérisé en ce que**, après le montage des composantes dans la structure encastrée dans la tour et avant édification de la tour, les composantes montées sont contrôlées.

16. Procédé selon la revendication 14 ou 15, **caractérisé en ce que** la section de tour est fournie à la verticale.

17. Procédé selon l'une quelconque des revendications 14 à 16, **caractérisé en ce que** la section de tour est transportée à la verticale au lieu d'édification de la tour.

18. Procédé selon l'une quelconque des revendications 14 à 17, **caractérisé par**
- la fixation d'une bride inférieure à la section de tour avant que la section de tour soit fournie.
